# EUROPEAN PATENT SPECIFICATION

(11) **EP 1 694 587 B1**
(45) Date of publication and mention of the grant of the patent: **26.10.2011**
(21) Application number: 04797111.4
(22) Date of filing: 30.11.2004
(51) Int. Cl.: B65G 17/00, B65G 17/14, B65G 17/26, B65G 17/38, B66B 9/10, B66B 11/06, B66B 15/02, B61B 11/00, B61B 12/10

(54) **TRANSMISSION MECHANISMS AND COMPONENTS THEREFOR**
KRAFTÜBERTRAGUNGSMECHANISMUS UND KOMPONENTEN DAFÜR
MECANISMES DE TRANSMISSION ET COMPOSANTS ASSOCIES

(30) Priority: 18.12.2003 AU 2003907032
(43) Date of publication of application: 30.08.2006
(73) Proprietor: Martin Gessner PTY Ltd, Gunnedah, NSW 2380 (AU)
(72) Inventor: MARTIN, Kevin, Joseph, Gunnedah, New South Wales 2380 (AU)
(74) Representative: Sherrard-Smith, Hugh
(86) International application number: PCT/AU2004/001670
(87) International publication number: WO 2005/058733

(56) References cited:
- EP-A- 0 020 148
- DE-A1- 3 235 471
- DE-U1- 9 302 482
- FR-A1- 2 320 876
- GB-A- 1 459 589
- US-A- 1 956 312
- US-A- 3 643 792
- US-A- 3 876 089
- US-A- 4 506 781
- US-B1- 6 244 425

## Description

This invention relates to a cable assembly suitable for use in transmission mechanisms.

One particular application of the present invention concerns its use in conveying apparatus. One particular form of conveying apparatus is described in Australian Patent Specification No. 27682/02. The contents of Patent Specification No. 27682/02 is incorporated into the present specification by way of cross reference. It will be convenient to hereinafter describe the invention with reference to this particular application however, it is to be understood that this is not to be taken as a limitation as to the scope of the present invention.

In Australian Patent Specification No. 27682/02 there is described a mechanism in which the endless track members are in the form of chains which are adapted to cooperate with sprockets. A disadvantage of chain members is that they are relatively bulky and heavy.

US 1 956 312 discloses a cable assembly according to the preamble of claim 1, partionarly an assembly of sectional band and driving pulleys having spaced toothed rings. Carriers are supported on suitably formed plates interposed between and connected by sections of the band and adapted to ride in peripheral faces of the pulleys. The plates have projections that enrage the teeth of the gears.

According to one aspect of the present invention there is provided a cable assembly suitable for use in a transmission mechanism which includes at least one wheel which the cable assembly passes at least partially around when in use, the cables assembly including at least one cable having end portions and a connector for operatively connecting the end portions of the cable so as to form an endless track, the connector including a power transmission member and a coupling operatively connecting the end portions of the cable to the power transmission member, the power transmission member being a generally tubular member and circular in cross-section generally having end sections receivable within the recesses in the wheel as the cable assembly passes therearound, the coupling including a coupling element operatively connected to the power transmission member between the end sections whereby each cable has end portions which are operatively connected together by the connector device so as to form an endless cable or track, there being, a plurality of connecting means arranged in spaced apart relation along the cable length, **characterised in that** the end sections including rotatable bushes.

in one form a plurality of wheel may be provided. Preferably, the or each wheel is in the form of a sheave which has a plurality of grooves formed in the outer peripheral surface thereof, the grooves communicating with cavities in the outer peripheral surfaces. The recesses are preferably disposed at the edges of the peripheral surface.

The cable assembly may include a plurality of cables each being associated with a respective groove and cavity in the sheave. Each connector may include a power transmission member which may be in the form of a tubular body or trunnion having end portions which are receivable within the recesses in the drive wheel. In one particular application the power transmission members are adapted to have connected thereto carriages such as those shown and described in Australian Patent Specification No. 27682/02.

The connector may further include a coupling operatively connecting the end portions of the cable to the power transmission member. In one form the coupling may include a clevis secured to the outer surface of the tubular member and a tongue on the end of the cable. The tongue may be connected to the cable by swaging or any other suitable process. A pin preferably provides for connection between the tongue and clevis.

In another form the coupling may include a plate mounted to the tubular member for at least partial rotation relative thereto. The plate includes one or more tongue portions and the coupling farther includes at least one clevis associated with a respective tongue portion the clevis being operatively connected to an end of the cable with the tongue being operatively connected to the clevis. Retaining rings may be provided on the outer surface of the tubular member to limit lateral movement of the plate.

Preferred embodiments of the invention will hereinafter be described with reference to the accompanying drawings, and in those drawings:
FIG. 1 is a schematic side elevation of a drive device according to the present invention;
Figure 2 is a detail of part of the drive device shown in Figure 1; and
Figure 3 is a specific detail of part of first embodiment of device in shown in Figures 1 and 2.
Figure 4 is a schematic plan view of a second embodiment of device;
Figure 5 is an end view of the device shown in Figure A; and
Figure 6 is a perspective view of part of the device shown in Figures 4 and 5.

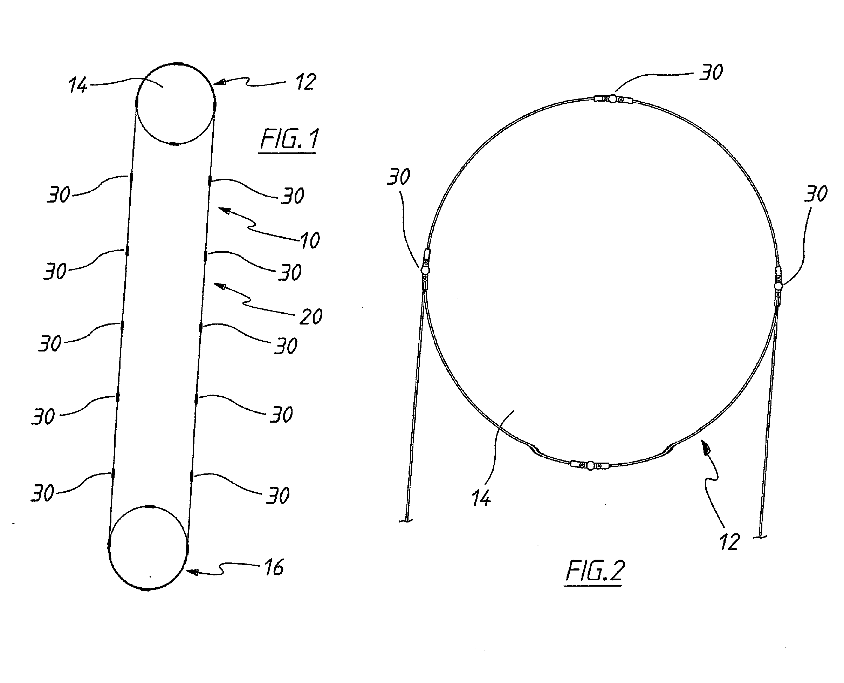

Referring to Figure 1. of the drawings there is shown a transmission mechanism generally indicated at 10 comprising a first wheel 12 and a second wheel 16. In the preferred embodiment shown the wheels are in the form of sheaves 14 which have a plurality of grooves 13 formed in the outer peripheral surface thereof, the grooves communicating with cavities 15. The sheaves further include recesses 17 at the edges of the peripheral surface.

The transmission mechanism 10 further includes a cable assembly 20 which comprises a plurality of cables 22 each being associated with a respective groove and cavity in the sheave. Each cable 22 has end portions 24 and 25 which are operatively connected together by connecting means 30 so as to form an endless cable or track. As best seen in Figure 1 a plurality of connecting means 30 are arranged in spaced apart relation along the cable length. Each connecting means 30 includes a power transmission member 32 in the form of a tubular member or trunnion 33 having end sections 34 and 35 which are receivable within the recesses 17. The end sections 34 and 35 comprise a rotatable bush 36 and 37. The power transmission members are adapted to have connected thereto carriages such as those shown and described in Australian Patent Specification No. 27682/02.

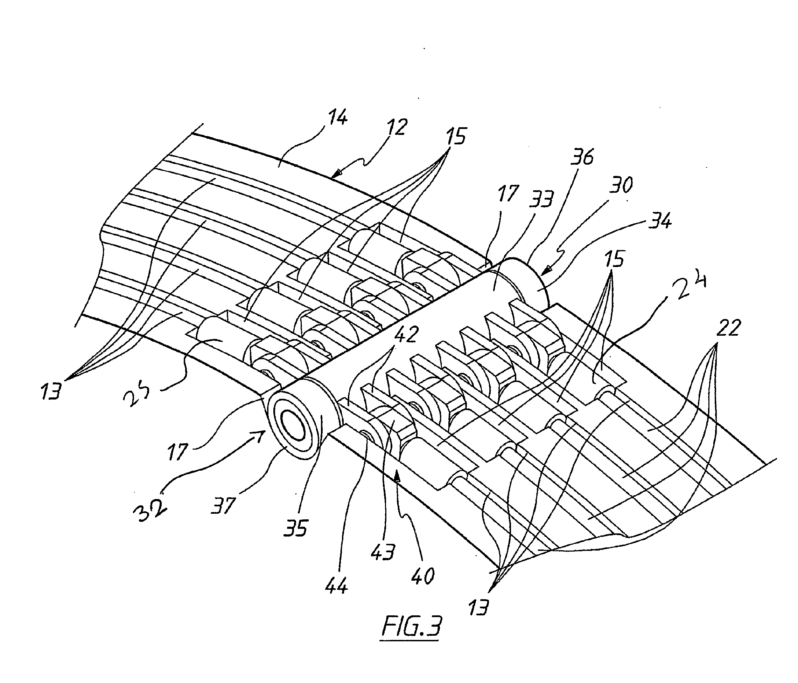

A coupling 40 operatively connects the end portions of the cable to the power transmission member. The coupling 40 as shown in Figure 3 includes a clevis 42 secured to the outer surface of the tubular member and a tongue 43 on the end of the cable. The tongue may be connected to the cable by swaging or any other suitable process. A pin 44 provides for connection between the tongue and clevis. Provision may be made for adjustment of the connection of the cable to the power transmission member.

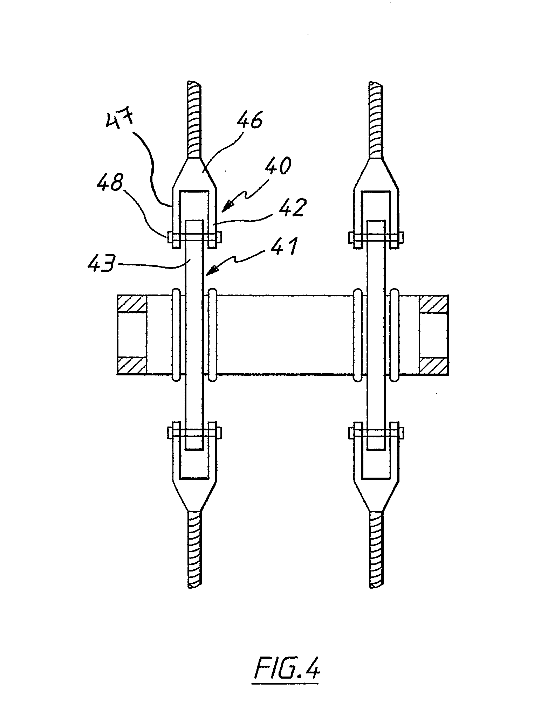

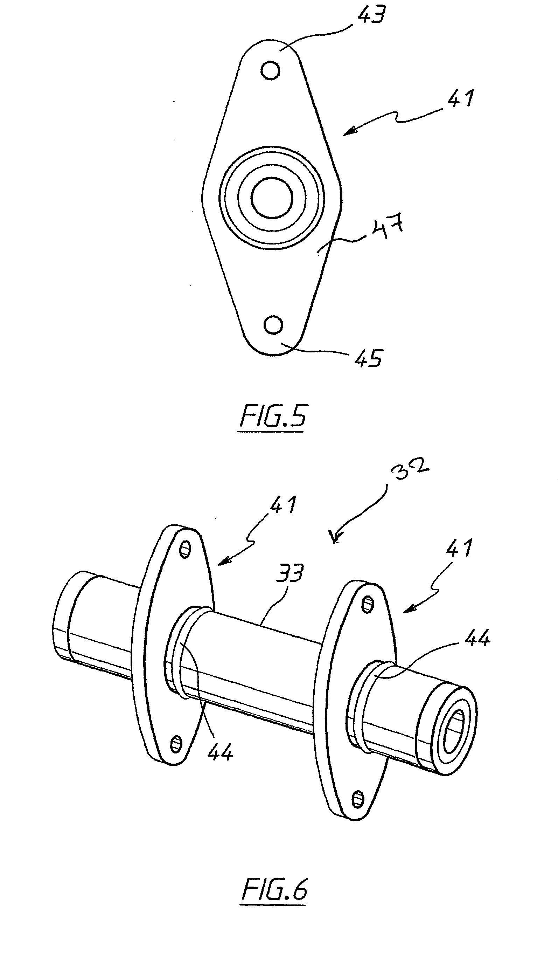

As shown in Figures 4 to 6 the coupling 40 includes coupling member 41 in the form of a plate 47 pivotally mounted on the tubular member. Lateral movement of the plate 47 is limited by retaining rings 44. The plate 47 includes tongues 43 and 45 thereon. The coupling means further includes a clevis 46 swaged to the ends of the cable. A pin 48 provides for connection between a tongue 43 and its associated clevis.

As will be appreciated any number of cables can be provided for the cable assembly. In one form the power transmission members may be segmented. If desired the sheaves may also be segmented. The distance between the power transmission members can be varied to accommodate attachments that travel around at a timed sequence.

Advantages of the system of the invention include that it is less bulky and relatively light and further alleviates problems associated with slippage and creeping.

It will be appreciated that when in the assembled position one or more power transmission members 32 are located within recesses 17 in the wheel 12. As the wheel rotates one of the transmission members disengages from the recess and a further transmission member will become engaged.

## Claims

1. A cable assembly (30) suitable for use in a transmission mechanism (10) which includes at least one wheel (12, 16) having recesses (17) therein which the cable assembly passes at least partially around when in use, the cable assembly (10) including at least one cable (22) having end portions (24, 25) and a connector device (30) for operatively connecting the end portions (24, 25) of the cable (22) so as to form an endless track, the connector device (30) including a power transmission member (32) and a coupling (40) operatively connecting the end portions (24, 25) of the cable (22) to the power transmission member (32), the power transmission member (32) being a generally tubular member (33) and circular in cross-section generally having end sections (34, 35) receivable within the recesses (17) in the wheel (12, 16) as the cable assembly passes therearound, the coupling (40)including a coupling element (41) operatively connected to the power transmission member (32) between the end sections (34, 35) whereby each cable has end portions (24, 25) which are operatively connected together by the connector device (30) so as to form an endless cable or track, there being, a plurality of connecting means (30) arranged in spaced apart relation along the cable length, **characterised in that** the end sections (34, 35) including rotatable bushes (36, 37).

2. A cable assembly according to claim 1 wherein the or each wheel (12, 16) of the transmission mechanism (10) is in the form of a sheave (14) which has a plurality of grooves (13) formed in the outer peripheral surface thereof, the grooves communicating with cavities (15) in the outer peripheral surfaces, the recesses (17) being disposed at the edges of the peripheral surface, **characterized in that** the cable assembly further includes a plurality of cables (22) each being associated with a respective groove and cavity in the sheave.

3. A cable assembly according to any preceding claim wherein the coupling (40) is arranged so that the load applied to the power transmission member (32) by the cable is in the region of the central axis of the power transmission member.

4. A cable assembly according to any preceding claim wherein the coupling element (41) of the coupling includes a clevis (42) secured to the outer surface of the power transmission member and a tongue (43) on the ends of the cable which is operatively connected to the clevis.

5. A cable assembly according to claim 4 wherein the tongue (43) is connected to the cable by swaging.

6. A cable assembly according to claim 5 including a pin (44) for connection between the tongue (43) and clevis (42).

7. A cable assembly according to any one of claims 1 to 3 wherein the coupling element (41) of the coupling includes a plate (47) mounted to said power transmission member for at least partial rotation relative thereto, said plate including one or more tongue portions (43, 45) and said coupling further including at least one clevis (46) associated with a respective tongue portion (43,45) said clevis (46) being operatively connected to an end of the cable, the tongue being operatively connected to the clevis.

8. A cable assembly according to claim 7 further including retaining rings (44) on the outer surface of the power transmission member to limit lateral movement of the plate.

## Patentansprüche

1. Seilanordnung (20), die zur Verwendung in einem Kraftübertragungsmechanismus (10) geeignet ist, der mindestens ein Rad (12, 16) mit Aussparungen (17) darin enthält, um die die Seilanordnung im Gebrauch zumindest teilweise herum passiert, wobei die Seilanordnung (20) mindestens ein Seil (22) mit Endteilen (24, 25) und eine Verbindervorrichtung (30) zur Wirkverbindung der Endteile (24, 25) des Seils (22) enthält, um ein Endlosglied zu bilden, wobei die Verbindervorrichtung (30) ein Kraftübertragungsglied (32) und eine Kupplung (40), die die Endteile (24, 25) des Seils (22) mit dem Kraftübertragungsglied (32) wirkverbindet, enthält, wobei das Kraftübertragungsglied (32) ein allgemein röhrenförmiges Glied (33) mit einem kreisförmigen Querschnitt ist, das allgemein Endabschnitte (34, 35) aufweist, die in den Aussparungen (17) im Rad (12, 16) aufgenommen werden können, wenn die Seilanordnung dort herum passiert, wobei die Kupplung (40) ein Kupplungselement (41) enthält, das mit dem Kraftübertragungsglied (32) zwischen den Endabschnitten (34, 35) wirkverbunden ist, wobei jedes Seil Endteile (24, 25) aufweist, die durch die Verbindervorrichtung (30) miteinander wirkverbunden sind, um ein Endlosseil oder -gleis zu bilden, wobei mehrere Verbindermittel (30) in voneinander beabstandeter Beziehung entlang der Seillänge angeordnet sind, **dadurch gekennzeichnet, dass** die Endabschnitte (34, 35) drehbare Buchsen (36, 37) enthalten.

2. Seilanordnung nach Anspruch 1, wobei das oder jedes Rad (12, 16) des Kraftübertragungsmechanismus (10) in Form einer Rillenscheibe (14) vorliegt, die mehrere Nuten (13) aufweist, welche in ihrer Außenumfangsfläche ausgebildet sind, wobei die Nuten mit Hohlräumen (15) in den Außenumfangsflächen in Verbindung stehen, wobei die Aussparungen (17) an den Rändern der Umfangsfläche angeordnet sind, **dadurch gekennzeichnet, dass** die Seilanordnung weiterhin mehrere Seile (22) enthält, die jeweils einer jeweiligen Nut und einem jeweiligen Hohlraum in der Rillenscheibe zugeordnet sind.

3. Seilanordnung nach einem vorhergehenden Anspruch, wobei die Kupplung (40) so angeordnet ist, dass die durch das Seil an das Kraftübertragungsglied (32) angelegte Last in dem Bereich der Mittelachse des Kraftübertragungsglieds liegt.

4. Seilanordnung nach einem vorhergehenden Anspruch, wobei das Kupplungselement (41) der Kupplung einen Schäkel (46), der an der Außenfläche des Kraftübertragungsglieds befestigt ist, und eine Zunge (43) an den Enden des Seils, die mit dem Schäkel wirkverbunden ist, enthält.

5. Seilanordnung nach Anspruch 4, wobei die Zunge (43) durch Verstemmen mit dem Seil verbunden ist.

6. Seilanordnung nach Anspruch 5, die einen Stift (44) zur Verbindung zwischen der Zunge (43) und dem Schäkel (46) enthält.

7. Seilanordnung nach einem der Ansprüche 1 bis 3, wobei das Kupplungselement (41) der Kupplung eine Platte (47) enthält, die an dem Kraftübertragungsglied zur mindestens teilweisen Drehung bezüglich dessen angebracht ist, wobei die Platte einen oder mehrere Zungenteile (43, 45) enthält und die Kupplung weiterhin mindestens einen Schäkel (46) enthält, der einem jeweiligen zungenteil (43, 45) zugeordnet ist, wobei der Schäkel (46) mit einem Ende des Seils wirkverbunden ist, wobei die Zunge mit dem Schäkel wirkverbunden ist.

8. Seilanordnung nach Anspruch 7, die weiterhin Halteringe (44) an der Außenfläche des Kraftübertragungsglieds zur Begrenzung einer lateralen Bewegung der Platte enthält.

## Revendications

1. Ensemble de câble (20) approprié pour être utilisé dans un mécanisme de transmission (10) qui comprend au moins une roue (12, 16) comportant des évidements (17) autour de laquelle l'ensemble de câble passe au moins partiellement lors de l'utilisation, l'ensemble de câble (20) comprenant au moins un câble (22) présentant des parties d'extrémité (24, 25), et un dispositif de connecteur (30) pour connecter de façon opérationnelle les parties d'extrémité (24, 25) du câble (22) de manière à former une piste sans fin, le dispositif de connecteur (30) comprenant un élément de transmission de puissance (32) et un couplage (40) qui connecte de façon opérationnelle les parties d'extrémité (24, 25) du câble (22) à l'élément de transmission de puissance (32), l'élément de transmission de puissance (32) étant un élément essentiellement tubulaire (33) et de section transversale circulaire présentant d'une manière générale des sections d'extrémité (34, 35) qui peuvent être reçues à l'intérieur des évidements (17) dans la roue (12, 16) lorsque l'ensemble de câble passe autour de celle-ci, le couplage (40) comprenant un élément de couplage (41) qui est connecté de façon opérationnelle à l'élément de transmission de puissance (32) entre les sections d'extrémité (34, 35), dans lequel chaque câble présente des parties d'extrémité (24, 25) qui sont connectées de façon opérationnelles l'une à l'autre par le dispositif de connecteur (30) de manière à former un câble ou une piste sans fin, une pluralité de moyens de connexion (30) étant agencés dans une relation espacée les uns des autres le long de la longueur de câble, **caractérisé en ce que** les sections d'extrémité (34, 35) comprennent des douilles rotatives (36, 37).

2. Ensemble de câble selon la revendication 1, dans lequel la ou chaque roue (12, 16) du mécanisme de transmission (10) se présente sous la forme d'un galet (14) qui comporte une pluralité de rainures (13) qui sont formées dans la surface périphérique extérieure de celui-ci, les rainures communiquant avec des cavités (15) dans les surfaces périphériques extérieures, les évidements (17) étant disposés aux bords de la surface périphérique, **caractérisé en ce que** l'ensemble de câble comprend en outre une pluralité de câbles (22) qui sont chacun associés à une rainure et une cavité respectives dans le galet.

3. Ensemble de câble selon l'une quelconque des revendications précédentes, dans lequel le couplage (40) est agencé de telle sorte que la charge qui est appliquée à l'élément de transmission de puissance (32) par le câble soit située dans la région de l'axe central de l'élément de transmission de puissance.

4. Ensemble de câble selon l'une quelconque des revendications précédentes, dans lequel l'élément de couplage (41) du couplage comprend un étrier (46) qui est fixé à la surface extérieure de l'élément de transmission de puissance, et une languette (43) sur les extrémités du câble qui est connectée de façon opérationnelle à l'étrier.

5. Ensemble de câble selon la revendication 4, dans lequel la languette (43) est connectée au câble par estampage.

6. Ensemble de câble selon la revendication 5, comprenant une broche (44) pour réaliser une connexion entre la languette (43) et l'étrier (46).

7. Ensemble de câble selon l'une quelconque des revendications 1 à 3, dans lequel l'élément de couplage (41) du couplage comprend une plaque (47) qui est montée sur ledit élément de transmission de puissance afin d'effectuer une rotation au moins partielle par rapport à celui-ci, ladite plaque comprenant une ou plusieurs partie(s) de languette (43, 45), et ledit couplage comprenant en outre au moins un étrier (46) qui est associé à une partie de languette respective (43, 45), ledit étrier (46) étant connecté de façon opérationnelle à une extrémité du câble, la languette étant connectée de façon opérationnelle à l'étrier.

8. Ensemble de câble selon la revendication 7, comprenant en outre des anneaux de retenue (44) sur la surface extérieure de l'élément de transmission de puissance, qui ont pour but de limiter le déplacement latéral de la plaque.
